# FASCICULE DE BREVET EUROPEEN

(11) **EP 0 666 348 B1**
(45) Date de publication et mention de la délivrance du brevet: **13.05.1998**
(21) Numéro de dépôt: 94402997.4
(22) Date de dépôt: 22.12.1994
(51) Int. Cl.: D04H 1/42, F27D 1/00, C03C 13/00

(54) **Eléments thermo-isolants à base de fibres céramiques réfractaires thermiquement stabilisées**
Thermisch stabile Isolierbauteile aus feuerfesten Keramikfasern
Thermally stable insulating elements based on refractory ceramic fibres

(30) Priorité: 28.12.1993 FR 9315754
(43) Date de publication de la demande: 09.08.1995
(73) Titulaire: SOCIETE EUROPEENNE DES PRODUITS REFRACTAIRES, F-92400 Courbevoie (FR)
(72) Inventeur: Urffer, Daniel, F-84310 Morieres-Les-Avignon (FR); Recasens, Joseph, F-84700 Sorgues (FR)
(74) Mandataire: Colas, Jean-Pierre

(56) Documents cités:
- EP-A- 0 390 223
- EP-A- 0 450 323
- DE-U- 9 014 423
- FR-A- 2 403 317
- FR-A- 2 507 594
- FR-A- 2 664 586
- US-A- 2 873 197

## Description

L'invention concerne des éléments thermo-isolants à base de fibres céramiques réfractaires thermiquement stabilisées.

Pour l'isolation des fours industriels, dès que la température de fonctionnement en continu avoisine ou dépasse 1300°C, on utilise des éléments modulaires à base de fibres céramiques réfractaires du type "modules" tels que ceux décrits dans le brevet français N° 2 403 317 ou son équivalent américain N° 4 238 257 ou du type "blocs" tels que décrits dans le brevet français N° 2 507 594 ou son équivalent américain N° 4 440 099.

Les modules, appelés aussi parfois dalles, sont des éléments de forme généralement carrée et d'épaisseur comprise entre 25 et 100 mm formés par une pluralité de bandes maintenues assemblées côte-à-côte, sans compression, chaque bande étant constituée de fibres réfractaires enchevêtrées dont la majeure partie est perpendiculaire aux deux faces principales de la dalle. La pose se fait par collage à l'aide d'un ciment sur les garnissages existants constitués de briques, béton ou d'une première couche de blocs à base de fibres.

Les blocs de forme parallélépipédique ont des épaisseurs de 100 à 300 mm et sont également formés de bandes de fibres réfractaires juxtaposées et précomprimées dans une enveloppe formée d'un film ou d'un filet en matière plastique. Ils comportent en outre un système en général métallique de maintien pour assurer la cohésion des bandes et de fixation pour permettre leur mise en place rapide.

Parmi les fibres céramiques réfractaires utilisées pour fabriquer de tels modules et blocs se trouvent les fibres AZS, c'est-à-dire des fibres dont la composition est principalement constituée par de l'alumine, de la zircone et de la silice, et qui sont obtenues par fusion d'un mélange des oxydes constituant la composition réfractaire et dispersion de la matière fondue en fibres soit par soufflage, soit à l'aide d'un ou plusieurs rotors, comme cela est bien connu de l'homme du métier. FR-A-1 152 574 et son équivalent US-A-2 873 197 décrivent de telles fibres constituées, en poids, de 40-60 % SiO₂, 20-45 % Al₂O₃ et 3,5-20 % ZrO₂.

Il est à noter que, de façon habituelle, les masses fibreuses formées à partir de mélanges d'oxydes fondus comprennent des particules pseudo-sphériques appelées "infibrés" (en anglais "shots") en quantité pouvant atteindre 35 à 55% du poids total. Pour ce qui suit, on désignera cependant par "fibres" une masse constituée de fibres de diamètre compris entre 0,5 et 10 µm (en moyenne 1,5 à 3 µm) et d'infibrés, définis par un rapport longueur/diamètre inférieur à 5. Le taux d'infibrés est mesuré selon le test NF.40455, qui permet d'évaluer la proportion d'infibrés de taille supérieure ou égale à 40 µm.

Cependant, malgré une composition chimique adaptée aux hautes températures, c'est-à-dire une réfractarité intrinsèque largement suffisante puisque la fusion n'intervient qu'à partir de 1650°C, il est bien connu que, sur le plan pratique, la limite d'utilisation industrielle en continu de tels produits à base de fibres AZS est de l'ordre de 1330°C.

Ceci est dû à des transformations qui s'opèrent au niveau des fibres elles-mêmes par évolution de leur composition cristallographique liée à un phénomène de dévitrification (passage de l'état vitreux amorphe initial à un état partiellement cristallisé à environ 1000°C pour les fibres AZS), favorisé par les impuretés alcalines et par la présence des oxydes de calcium, fer et titane. Cette dévitrification entraîne un retrait dimensionnel notable des fibres individuelles. La cristallisation entraîne une fragilisation des fibres qui deviennent plus rigides et cassantes et cela d'autant plus que les cristaux formés sont gros. Les fibres AZS sont aussi sujettes à un collage aux points de contact entre les fibres dû au ramollissement - pendant le processus de dévitrification - de la phase vitreuse résiduelle.

De plus, un problème particulier aux éléments modulaires et blocs en fibres, notamment AZS, est que les transformations ne s'effectuent pas dans tout le volume du produit, mais progressivement jusqu'à une certaine profondeur à partir de la face exposée directement au flux thermique (souvent appelée face chaude par les spécialistes), ce qui rend petit à petit hétérogène la structure de l'ensemble.

Ces phénomènes entraînent un post-retrait à l'échelle des blocs ou modules et provoquent l'ouverture des joints entre les éléments placés côte à côte, ce qui est gravement préjudiciable à la tenue de la structure du four, car elle se trouve alors soumise directement au flux thermique et aux éléments volatils corrosifs qui règnent dans le four. Combiné à l'hétérogénéité de structure, le post-retrait peut conduire à la chute des parties les plus transformées, phénomène nuisible pour les utilisations habituelles.

Il existe donc un besoin pour des éléments fibreux en AZS améliorés, tels que des éléments modulaires et blocs, qui puissent être utilisés en continu à des températures plus élevées que les éléments actuels tout en conservant les autres propriétés désirables de ces éléments.

La présente invention vise justement à satisfaire ce besoin en fournissant un élément thermiquement isolant réfractaire en fibres d'AZS à performances améliorées, présentant un taux de cristallisation homogène dans toute sa masse.

Plus particulièrement l'invention concerne un élément thermiquement isolant réfractaire formé pour l'essentiel de fibres céramiques réfractaires mécaniquement associées entre elles, dont la composition comprend au moins 97,5% en poids d'alumine, de silice et de zircone au total, caractérisé en ce que :
a) aucun liant organique ou minéral ne lie les fibres entre elles;
b) les fibres ont la composition chimique suivante, en % en poids :

| | |
|---|---|
| Al₂O₃ | 33-45 % |
| SiO₂ | 41-53 % |
| ZrO₂ | 5,5-17 % |
| MgO | 0,02-2 % |
| autres oxydes | < 0,50 % avec Fe₂O₃ + TiO₂ ≤ 0,20 % et Na₂O + CaO + K₂O ≤ 0,30 %; |

c) lesdites fibres présentent de façon homogène dans toute la masse de l'élément un taux de cristallinité d'au moins 30 % et d'au plus 64 %, les cristaux présents étant essentiellement formés de cristaux de mullite et de zircone quadratique; et
d) ledit élément présente un retrait linéaire d'au plus 3 % après maintien pendant 24 heures à 1450°C.

De préférence, la teneur en ZrO₂ est d'au moins 10 % en poids.

De préférence, le retrait linéaire n'excède pas 2,5 %.

De préférence également, l'élément de l'invention présente une élasticité d'au moins 33,3%, ladite élasticité correspondant au pourcentage d'accroissement d'épaisseur d'un élément comprimé jusqu'à une masse volumique de 200 kg/m³ lorsqu'on relâche les forces de compression. Par exemple un bloc de 300 mm d'épaisseur comprimé à 200 kg/m³ et mis sous housse plastique, devra prendre une épaisseur d'au moins 400 mm lorsqu'on le libérera de sa housse après sa mise en place dans un four.

L'élément thermiquement isolant réfractaire amélioré de l'invention peut être, par exemple, produit par un procédé consistant, pour l'essentiel, à :
a) former une nappe de fibres réfractaires ayant la composition chimique suivante, en % en poids :

| | |
|---|---|
| Al₂O₃ | 33-45 % |
| SiO₂ | 41-53 % |
| ZrO₂ | 5,5-17 % |
| MgO | 0,02-2 % |
| autres oxydes | < 0,50 % avec Fe₂O₃ + TiO₂ ≤ 0,20 % et Na₂O + CaO + K₂O ≤ 0,30 %; |

b) découper cette nappe en bandes, et
c) assembler les bandes en éléments réfractaires, thermiquement isolants, précomprimés, dans lequel préalablement à l'étape (c), on traite thermiquement la nappe ou les bandes en atmosphère oxydante en les chauffant à une température maximale de 1250 à 1450°C, de préférence de 1250 à 1400°C pour des raisons de disponibilité de four de traitement capable de travailler au-dessus de 1400°C, à une vitesse et pendant un temps suffisant pour assurer le développement d'une cristallisation homogène jusqu'à un taux de cristallinité d'au moins 30 % et d'au plus 64 %, les cristaux formés étant essentiellement des microcristaux (< 100 nm) de mullite et de zircone quadratique.

Les fibres constituant l'élément de l'invention sont mécaniquement associées entre elles, sans utilisation d'un liant organique ou minéral quel qu'il soit. Par "mécaniquement associées", on veut dire que les fibres forment une masse cohérente dont la cohésion est le seul résultat d'une action mécanique telle qu'une compression, un aiguilletage ou autre moyen équivalent, produisant un enchevêtrement des fibres.

Les éléments selon l'invention doivent présenter un retrait linéaire d'au plus 3 %, de préférence d'au plus 2,5 %, après avoir été maintenus à 1450°C pendant 24 heures. Ceci assure qu'ils présenteront un faible retrait à la température de service continue visée, qui sera habituellement inférieure à 1450°C.

Avec cet objectif en vue (retrait ≤ 3 %), on a déterminé par une série d'essais que la composition chimique des fibres devait comprendre, en tant qu'ingrédients essentiels constituant au moins 97,5% de la composition, en % en poids, 33-45 % d'Al₂O₃, 41-53 % de SiO₂ et 5-17% de ZrO₂, les compositions se situant en dehors de ces gammes présentant des retraits supérieurs à 3%. Les constituants mineurs MgO, Fe₂O₃, TiO₂, CaO, Na₂O et K₂O, éventuellement présents, sont des impuretés provenant des matières premières. Ces impuretés influent sur la quantité et la qualité de la phase vitreuse des fibres et, donc, sur le phénomène de collage qui a, à son tour, un effet direct sur l'élasticité. MgO, de son côté, peut être toléré jusqu'à une teneur de 2,0%, valeur à partir de laquelle son action devient néfaste pour le retrait et l'élasticité du produit.

Pour satisfaire l'objectif de faible retrait thermique en service à haute température et de conservation des autres propriétés désirables des éléments en fibres AZS, à savoir faible densité, faible conductivité thermique, souplesse des fibres désirable pour la manipulation et la mise sous forme d'éléments précomprimés, et élasticité des éléments pour une pose aisée de ceux-ci, il est apparu que les fibres constitutives des éléments selon l'invention devaient avoir un taux de cristallinité homogène d'au moins 30 % et d'au plus 64 % afin d'établir un bon compromis entre les diverses exigences. En dessous de 30 %, les fibres n'ont pas une stabilité thermique suffisante (retrait linéaire excessif) et au-delà de 64 % les autres propriétés désirables (élasticité, notamment) se dégradent exagérément.

Les cristaux formés doivent être essentiellement formés de mullite et de zircone quadratique. De faibles quantités de zircone monoclinique (< 2,5%) et de cristobalite (≦ 1%) peuvent, cependant, être tolérées. Les cristaux formés doivent aussi être à grain fin, c'est-à-dire d'une grosseur inférieure à 100 nm, de préférence à 70 nm.

Pour assurer le taux de cristallinité désiré, les fibres sont soumises à un traitement thermique contrôlée à haute température. On a trouvé qu'un traitement thermique à une température de 1250 à 1450°C, de préférence de 1250 à 1400°C, permettait d'obtenir des produits satisfaisants en des temps raisonnables. Toutefois, n'importe quel traitement dans cette gamme de températures ne donnera pas le résultat recherché, c'est-à-dire l'obtention d'un élément isolant final présentant un retrait linéaire inférieur à 3%. Trois paramètres sont à prendre en compte en ce qui concerne le traitement thermique, à savoir la température maximale de traitement, la vitesse de chauffage (à partir de 980°C environ) et le temps de séjour à la température maximale.

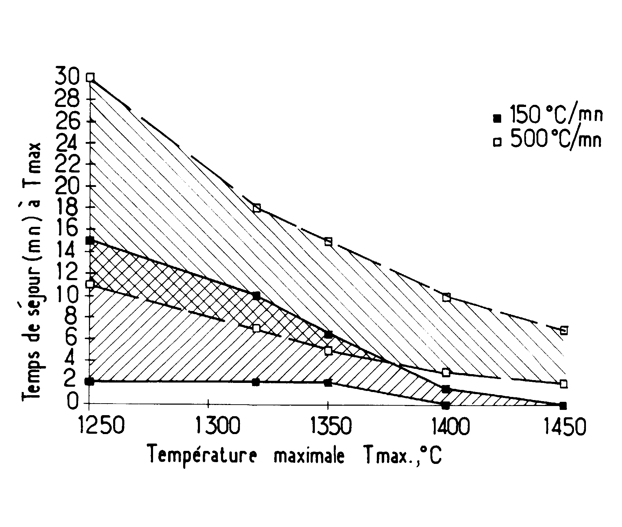

Les relations entre ces trois paramètres ne sont pas simples et sont plus facilement exprimées par un graphique. La figure unique est un exemple d'un tel graphique qui permet de déterminer, en fonction de la température maximale de traitement et de la vitesse de chauffage utilisée (à savoir 150°C/mn ou 500°C/mn dans les cas illustrés), les durées de séjour minimale (donnée par la courbe inférieure) et maximale (donnée par la courbe supérieure) de maintien des fibres à la température maximale. Par exemple, pour un traitement à 1320°C avec une vitesse de chauffage de 150°C/mn, le temps de séjour pourra varier entre environ 2 et 7 mn, tandis qu'il pourrait être d'environ 6 à 15 mn pour une vitesse de chauffage de 500°C/mn. Bien entendu, les vitesses de chauffage de 150°C/mn et de 500°C/mn ne sont que des vitesses indicatives et on pourrait tracer des courbes analogues à celles de la figure pour d'autres vitesses de chauffage.

Comme indiqué ci-dessus, on traite les fibres réfractaires avant leur transformation en élément isolant, car le traitement thermique direct d'un élément isolant fini n'est pas industriellement réaliste (durée, coût) et conduirait à des hétérogénéités dans le volume de l'élément. Le traitement thermique est donc avantageusement réalisé sur les matelas ou nappes de fibres obtenus en production et couramment utilisés pour fabriquer des éléments isolants, par exemple par découpe selon des bandes, juxtaposition de celles-ci avec précompression et mise sous enveloppe.

Les exemples non limitatifs suivants sont donnés dans le but d'illustrer l'invention.

### EXEMPLES 1-6 ET EXEMPLES COMPARATIFS A-D

On a fondu, coulé puis dispersé par soufflage, selon les méthodes bien connues de l'homme de l'art, un mélange à base d'oxydes Al₂O₃, SiO₂ et ZrO₂ ayant les compositions A, B, 1, 2, 3, 4, 5, 6, C et D, dans lesquelles l'oxyde de zirconium varie de 3 à 22% en poids de la composition totale. La masse fibreuse obtenue a été, de façon connue en soi, mise sous forme de nappes de 19 à 25 mm d'épaisseur par compactage mécanique avec aiguilletage. Ces nappes présentent une masse volumique de l'ordre de 96 kg/m³. Puis on a procédé au traitement thermique de ces nappes en four électrique en atmosphère oxydante (air) en les portant, à la vitesse de 150°C/minute à 1250°C et en les maintenant 2,5 minutes à cette température. Le tableau 1 résume les propriétés de ces produits.

Dans une seconde série d'essais, des fibres non thermiquement traitées de la composition 5 du tableau 1 ont été soumises à divers traitements thermiques afin de déterminer leur effet sur les taux de dévitrification et la taille des cristaux de mullite. Le tableau 2 résume les conditions adoptées pour ces traitements thermiques. Le tableau 3 résume les propriétés des produits obtenus.

Les valeurs indiquées pour les analyses chimiques et les propriétés telles que le post-retrait, le taux de dévitrification, la taille des cristaux et l'élasticité sont données dans les limites de la précision des méthodes utilisées.

Pour cette seconde série d'essais, les séquences de cristallisation ont été étudiées pour divers temps et températures de maintien en plaçant des échantillons dans un four électrique. Les phases formées et le taux de cristallisation sont mesurés par une méthode utilisant la diffraction des rayons X sur les produits ainsi traités thermiquement après leur refroidissement.

Cette méthode consiste à doser volumiquement les phases d'un échantillon quelconque de fibres fondues AZS par comparaison à un étalon de produit fibreux AZS cristallisé préalablement analysé à l'aide d'étalons purs de mullite, de cristobalite et de zircone monoclinique. Pour la zircone quadratique métastable à l'ambiante, par manque d'étalon et du fait que cette phase est formée de petits domaines cristallins, donc d'un mauvais état de cristallisation pour une telle mesure, on procède par calcul de la différence zircone totale - zircone monoclinique.

Les conditions opératoires étaient les suivantes :
* Diffractomètre à compteur proportionnel, anticathode en cuivre et filtre en nickel, goniomètre horizontal, alimentation du tube : 40kV, 30 mA et porte-échantillon tournant. Les mesures sont effectuées sur les raies suivantes :
   - cristobalite : 21°92 (d= 0,404 nm)
   - zircone monoclinique : 28°19 (d=0,316 nm)
   - mullite : 25°96 et 26°27 (d=0,342 nm et 0,339 nm)
* Echantillon étalon constitué par des fibres fondues AZS traitées thermiquement à 1350°C pendant 24 heures. Leur analyse chimique est, en % pondéraux, Al₂O₃ = 38,4%, SiO₂ = 47,2 %, ZrO₂ = 12,9 %, Fe₂O₃ = 0,13 %, TiO₂ = 0,05 % et MgO + CaO + Na₂O < 0,25 %. La mesure des phases cristallines présentes donne : mullite = 52 %, cristobalite = 22,6% et zircone monoclinique = 2,3 %. Par calcul, on déduit environ 10,5 % de zircone quadratique.

La taille des microcristaux de mullite formés par cristallisation est également mesurée par diffraction des rayons X en appliquant la méthode de l'élargissement de la raie de diffraction d'indices de Miller <110>. Seules les tailles inférieures à 100 nm peuvent être mesurées.

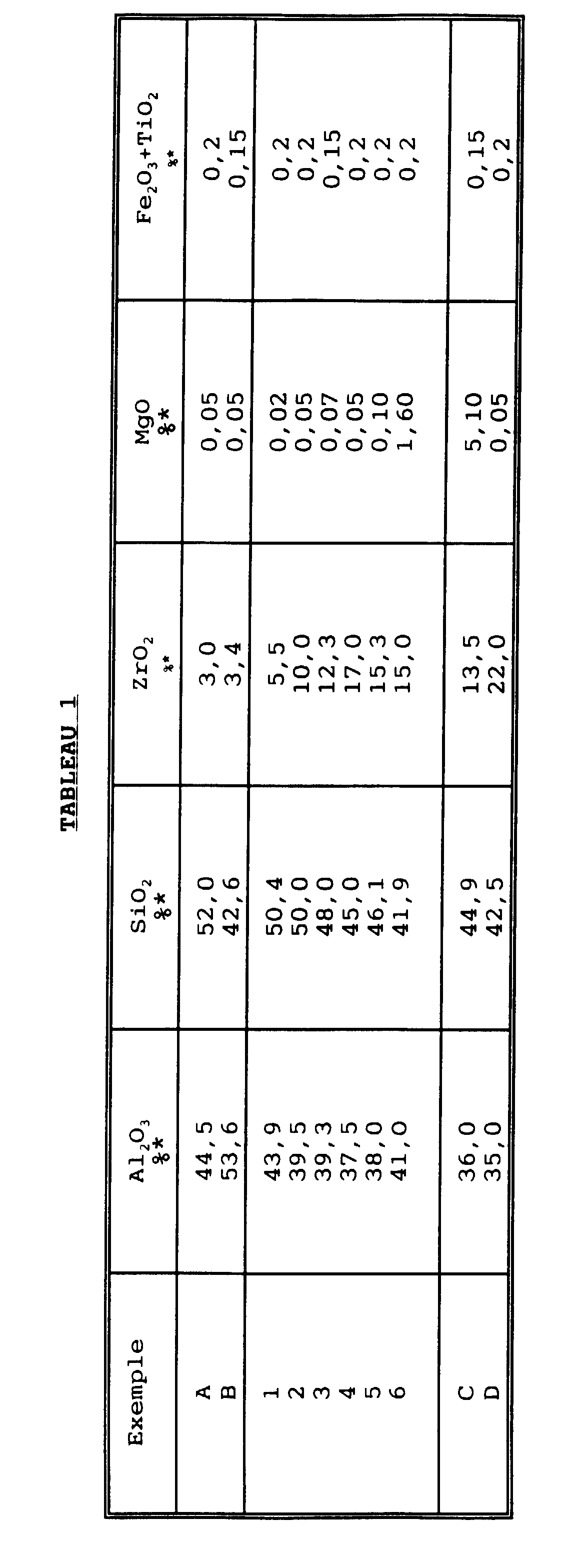

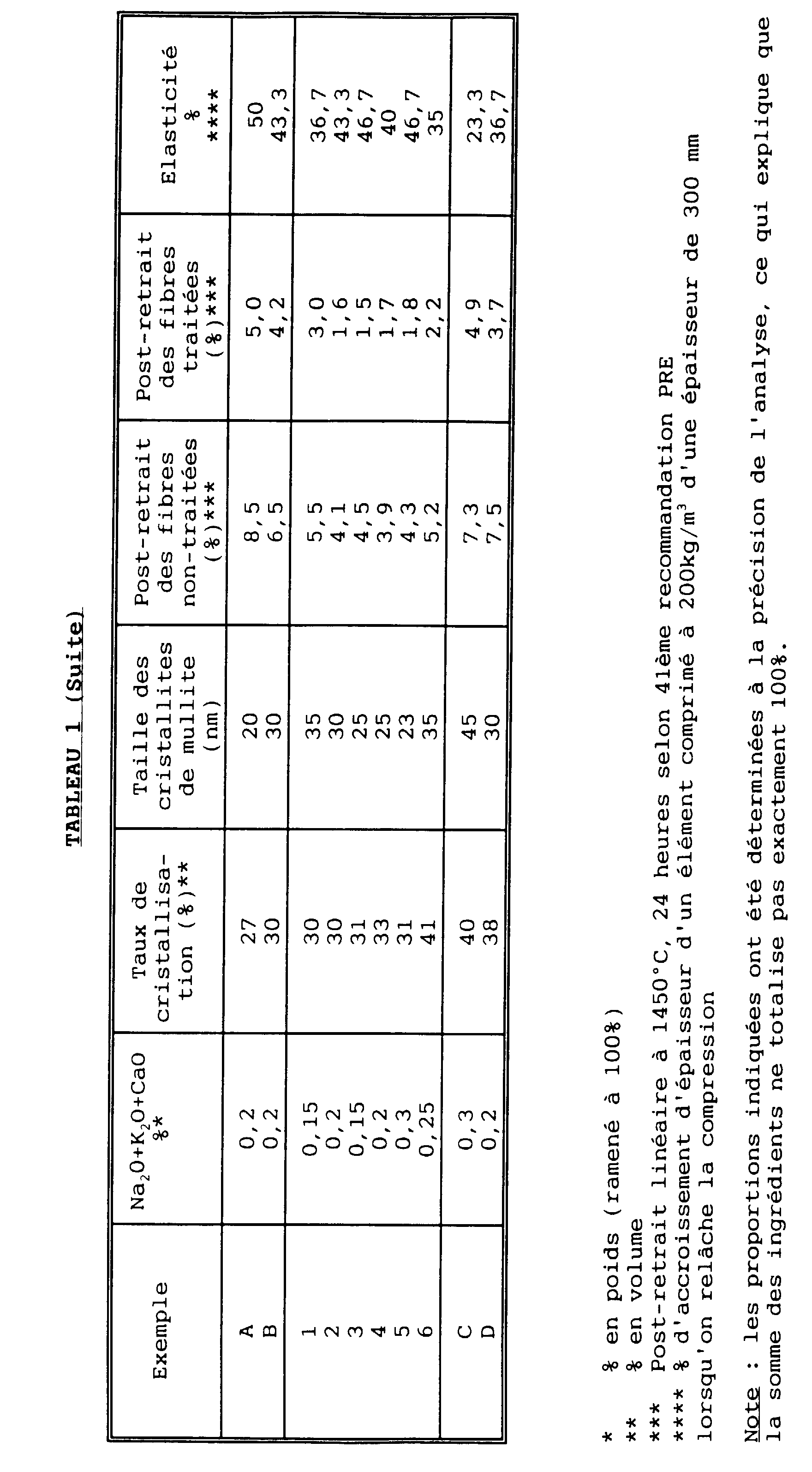

**TABLEAU 2**

| Traitement | Tmax (°C) | Séjour à Tmax (mn) | Vitesse de chauffage (°C/mn) |
|---|---|---|---|
| I | 1150 | 5 | 150 |
| II* | 1250 | 2,5 | 150 |
| III | 1350 | 5 | 150 |
| IV | 1400 | 10 | 500 à 600 |
| V | 1400 | 1,8 | 500 |
| VI | 1400 | 10 | 150 |
| VII | 1450 | 15 | 500 |

| | | | |
|---|---|---|---|
| * Le type de traitement II correspond aux conditions de traitement des compositions du Tableau 1 | | | |

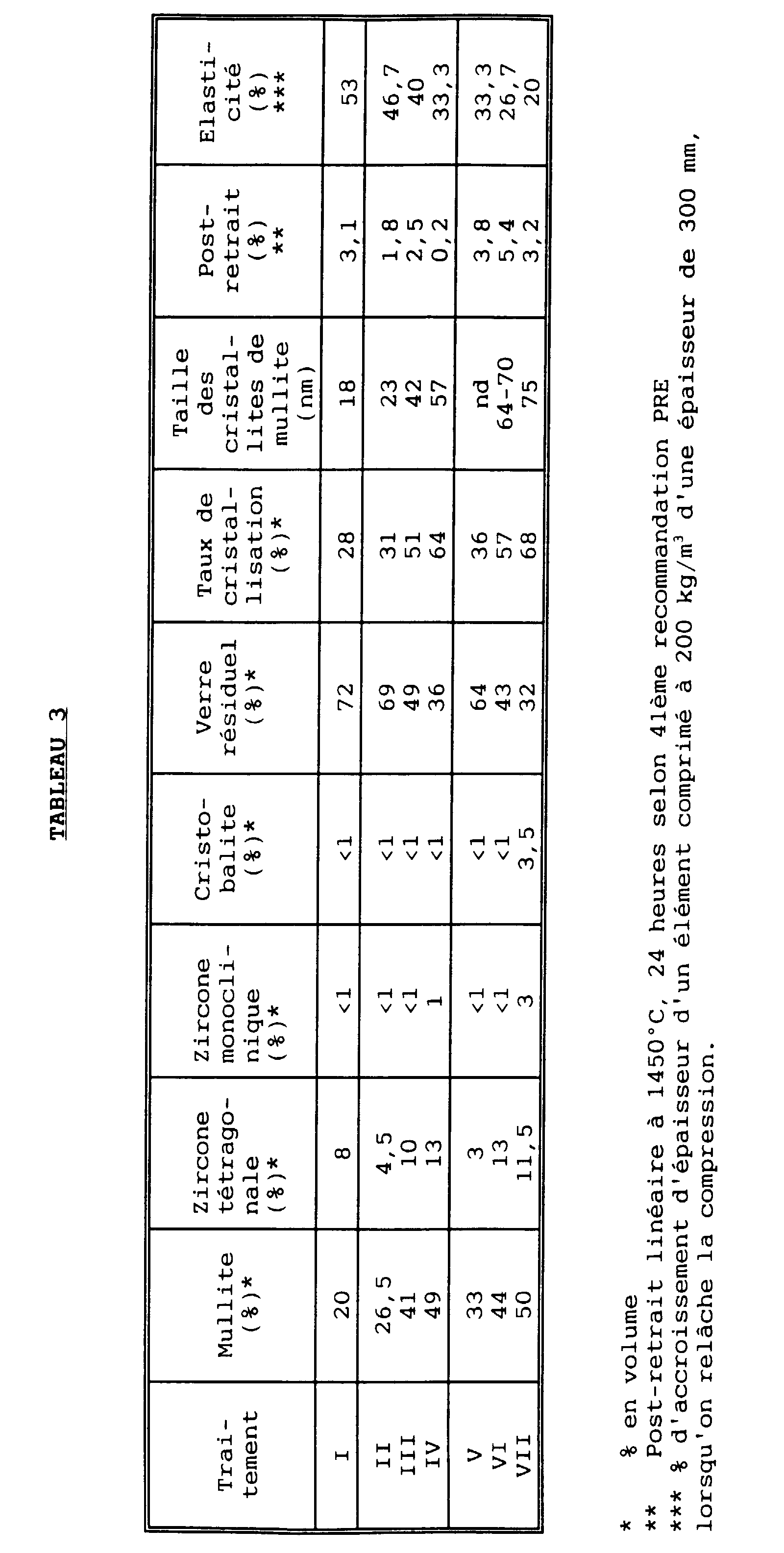

## Revendications

1. Elément thermiquement isolant réfractaire formé pour l'essentiel de fibres céramiques réfractaires mécaniquement associées entre elles, dont la composition comprend au moins 97,5% en poids d'alumine, de silice et de zircone au total, caractérisé en ce que :
a) aucun liant organique ou minéral ne lie les fibres entre elles;
b) les fibres ont la composition chimique suivante, en % en poids :
| | |
|---|---|
| Al₂O₃ | 33-45 % |
| SiO₂ | 41-53 % |
| ZrO₂ | 5,5-17 % |
| MgO | 0,02-2 % |
| autres oxydes | < 0,50 % avec Fe₂O₃ + TiO₂ ≤ 0,20 % et Na₂O + CaO + K₂O ≤ 0,30 %; |
c) lesdites fibres présentent de façon homogène dans toute la masse de l'élément un taux de cristallinité d'au moins 30 % et d'au plus 64 %, les cristaux présents étant essentiellement formés de cristaux de mullite et de zircone quadratique; et
d) ledit élément présente un retrait linéaire d'au plus 3 % après maintien pendant 24 heures à 1450°C.

2. Elément selon la revendication 1, caractérisé en ce que le retrait linéaire n'excède pas 2,5%.

3. Elément selon la revendication 1 ou 2, caractérisé en ce que la teneur en ZrO₂ est d'au moins 10% en poids.

4. Elément selon l'une quelconque des revendications 1 à 3, caractérisé en ce qu'il présente une élasticité d'au moins 33%, mesurée comme définie.

5. Elément selon l'une quelconque des revendications 1 à 4, caractérisé en ce qu'il contient moins de 2,5% en poids de cristaux de zircone monoclinique et au plus 1% en poids de cristaux de cristobalite.

## Patentansprüche

1. Thermisch isolierendes feuerfestes Element, das im wesentlichen aus feuerfesten keramischen Fasern besteht, die mechanisch miteinander vereinigt sind und deren Zusammensetzung wenigstens insgesamt 97,5 Gew.-% Aluminiumoxid, Siliciumdioxid und Zirkoniumoxid umfaßt, dadurch gekennzeichnet, daß:
a) kein organisches oder mineralisches Bindemittel die Fasern miteinander verbindet;
b) die Fasern die folgende chemische Zusammensetzung in Gew.-% haben:
| | |
|---|---|
| Al₂O₃ | 33-45% |
| SiO₂ | 41-53% |
| ZrO₂ | 5,5-17% |
| MgO | 0,02-2% |
| andere Oxide | < 0,50%, wobei Fe₂O₃ + TiO₂ ≤ 0,20% und Na₂O + CaO + K₂O ≤ 0,30%; |
c) die Fasern in der ganzen Masse des Elements in homogener Weise einen Kristallanteil von wenigstens 30% und höchstens 64% bilden, wobei die vorhandenen Kristalle im wesentlichen aus Mullitkristallen und tetragonalen Zirkoniumdioxidkristallen bestehen; und
d) das Element, nachdem es während 24 Stunden bei 1450°C gehalten worden ist, einen linearen Schwund von höchstens 3% aufweist.

2. Element gemäß Anspruch 1, dadurch gekennzeichnet, daß der lineare Schwund 2,5% nicht überschreitet.

3. Element gemäß Anspruch 1 oder 2, dadurch gekennzeichnet, daß der ZrO₂-Gehalt wenigstens 10 Gew.-% beträgt.

4. Element gemäß einem der Ansprüche 1 bis 3, dadurch gekennzeichnet, daß es eine definitionsgemäß gemessene Elastizität von wenigstens 33% aufweist.

5. Element gemäß einem der Ansprüche 1 bis 4, dadurch gekennzeichnet, daß es weniger als 2,5 Gew.-% monokline Zirkoniumdioxidkristalle und höchstens 1 Gew.-% Cristobalitkristalle enthält.

## Claims

1. A refractory thermally-insulating component consisting essentially of refractory ceramic fibers which are mechanically combined with one another, the composition of which comprises at least 97.5% by weight of alumina, silica and zirconia in total, caracterized in that:
a) no organic or inorganic binder binds the fibers to one another;
b) the fibers have the following chemical composition, in % by weight:
| | |
|---|---|
| Al₂O₃ | 33-45% |
| SiO₂ | 41-53% |
| ZrO₂ | 5.5-17% |
| MgO | 0.02-2% |
| other oxides | < 0.50% with Fe₂O₃ + TiO₂ ≤ 0.20% and Na₂O + CaO + K₂O ≤ 0.30%; |
c) the said fibers homogeneously have, throughout the entire body of the component, a degree of crystallinity of not less than 30% and not more than 64%, the crystals present being essentially formed of mullite crystals and of quadratic zirconia; and
d) the said component has a linear shrinkage of no more than 3% after being held for 24 hours at 1450°C.

2. The component as claimed in claim 1, caracterized in that the linear shrinkage does not exceed 2.5%.

3. The component as claimed in claim 1 or 2, caracterized in that the ZrO₂ content is not less than 10% by weight.

4. The component as claimed in any of claims 1 to 3, caracterized in that it has an elasticity of not less than 33%, measured as defined.

5. The component as claimed in any of claims 1 to 4, caracterized in that it contains less than 2.5% by weight of monoclinic zirconia crystals and not more than 1% by weight of cristobalite crystals.
